# EUROPÄISCHE PATENTSCHRIFT

(11) **EP 4 217 244 B1**
(45) Veröffentlichungstag und Bekanntmachung des Hinweises auf die Patenterteilung: **08.10.2025**
(21) Anmeldenummer: 21762656.3
(22) Anmeldetag: 11.08.2021
(51) Int. Cl.: B60T 8/40, B60T 8/94

(54) **VERFAHREN ZUM BETREIBEN EINES ELEKTROMOTORS, STEUERGERÄT, KOLBENPUMPE**
METHOD FOR OPERATING AN ELECTRIC MOTOR, CONTROLLER, PISTON PUMP
PROCÉDÉ DE FONCTIONNEMENT DE MOTEUR ÉLECTRIQUE, CONTRÔLEUR, POMPE À PISTON

(30) Priorität: 24.09.2020 DE 102020211994
(43) Veröffentlichungstag der Anmeldung: 02.08.2023
(73) Patentinhaber: Robert Bosch GmbH, 70442 Stuttgart (DE)
(72) Erfinder: EMDE, Christoph, 74211 Leingarten (DE); SCHMIDTLEIN, Andreas, 71732 Tamm (DE)
(86) Internationale Anmeldenummer: PCT/EP2021/072405
(87) Internationale Veröffentlichungsnummer: WO 2022/063481

(56) Entgegenhaltungen:
- EP-A1- 1 826 083
- US-A1- 2008 224 533
- US-A1- 2015 061 366
- US-B2- 10 562 399

## Beschreibung

Die Erfindung betrifft ein Verfahren zum Betreiben eines Elektromotors, insbesondere einer Kolbenpumpe, wobei der Elektromotor eine Rotorwelle aufweist und in Abhängigkeit von einer Leistungsanforderung mit einer Soll-Drehzahl und einer Soll-Drehrichtung für die Rotorwelle angesteuert wird, und wobei eine Ist-Drehzahl der Rotorwelle überwacht wird.

Außerdem betrifft die Erfindung ein Steuergerät für einen Elektromotor und eine Kolbenpumpe.

### Stand der Technik

Ein Bremsregelsystem, insbesondere ein Antiblockiersystem (ABS) bzw. eine Fahrdynamikregelung (elektronisches Stabilitätsprogramm ESP), als Teil einer Bremsanlage eines Kraftfahrzeugs weist in der Regel zumindest eine von einem Elektromotor antreibbare Kolbenpumpe auf. Diese ist zur Erzeugung eines hydraulischen Drucks in einem Bremskreis der Bremsanlage betreibbar. Mit einer Rotorwelle des Elektromotors ist dazu ein Nocken oder eine Exzenterscheibe drehfest verbunden. Der Nocken kann insbesondere direkt an der Rotorwelle angeordnet oder über ein Getriebe mit der Rotorwelle drehfest verbunden sein. Die Rotorwelle dreht sich um eine Drehachse. Durch den Nocken wird die Drehbewegung der Rotorwelle in eine translatorische Bewegung bzw. Längsbewegung eines Kolbens der Kolbenpumpe umgewandelt. Der Nocken liegt an dem Kolben derart an, dass der Kolben durch den Nocken mit einer Druckkraft beaufschlagt wird, durch welche der verschiebbar gelagerte Kolben in Längsrichtung verlagert wird. Diese Verlagerung erfolgt gegen ein Federelement und/oder einen Druck in dem Bremskreis. Der Elektromotor muss ein Antriebsdrehmoment aufbringen, um ein bei der Verlagerung des Kolbens gegen die von einem Verlagerungsweg abhängige Federkraft und/oder den Druck in dem Bremskreis hervorgerufenes Lastmoment zu überwinden. Ein von dem Elektromotor maximal bereitstellbares Antriebsdrehmoment ist dabei normalerweise größer als ein maximales Lastmoment. Das Lastmoment ist innerhalb einer Umdrehung des Nockens einmal maximal, wenn die maximale Verlagerung des Kolbens erreicht ist, da hier sowohl die von dem Verlagerungsweg abhängige Federkraft als auch der Druck im Bremskreis maximal sind. Wird die Rotorwelle weitergedreht, verlagert sich der Kolben wieder zurück in die ursprüngliche Richtung, da der Kolben aufgrund einer Vorspannung durch das Federelement an den Nocken angedrückt wird. Die Ansteuerung des Elektromotors erfolgt üblicherweise in Abhängigkeit von einer Leistungsanforderung zum Erreichen eines bestimmten Drucks oder Fördervolumens der Kolbenpumpe in dem Bremskreis mit einer Soll-Drehzahl und einer Soll-Drehrichtung für die Rotorwelle. Der Elektromotor kann jedoch blockieren, wenn das Antriebsdrehmoment des Elektromotors nicht dazu ausreicht, das Lastmoment zu überwinden. Dieser Fall kann insbesondere aufgrund einer geringen Bordnetzspannung in dem Fahrzeug, die die Leistungsaufnahme des Elektromotors und damit das maximale Antriebsdrehmoment begrenzt, oder einer hohen Temperatur einer Motorwicklung des Elektromotors, die zu einem höheren elektrischen Widerstand führt, oder aufgrund einer erhöhten Reibung am Kolben auftreten. Mit dem blockierten Elektromotor kann die Leistungsanforderung nicht erfüllt werden bzw. der Kolben der Kolbenpumpe kann nicht betätigt werden. Um eine solche Blockierung zu überwinden, ist es bekannt, den Elektromotor mit einem größeren maximalen Antriebsdrehmoment auszubilden, als es zur Überwindung des angenommenen maximalen Lastmoments nötig wäre, sodass kein Fall eintritt, in dem der Elektromotor blockiert.

Die Offenlegungsschrift US 2008/224533 A1 beschreibt ein Verfahren zum Betreiben eines Elektromotors, bei dem vorübergehend eine vorgegebene Soll-Drehrichtung für eine Rotorwelle geändert wird, um eine zu hohe Ist-Drehzahl der Rotorwelle aktiv zu verringern.

### Offenbarung der Erfindung

Das erfindungsgemäße Verfahren mit den Merkmalen des Anspruchs 1 zeichnet sich dadurch aus, dass bei einer Ist-Drehzahl gleich Null und einer Soll-Drehzahl ungleich Null die Soll-Drehrichtung für eine vorgegebene Zeitdauer geändert und anschließend der Elektromotor wieder mit der Soll-Drehzahl und der Soll-Drehrichtung angesteuert wird. Die Ansteuerung des Elektromotors erfolgt zunächst, wie aus dem Stand der Technik bekannt, in Abhängigkeit von einer Leistungsanforderung mit einer Soll-Drehzahl und einer Soll-Drehrichtung für die Rotorwelle des Elektromotors. Dabei wird auch die Ist-Drehzahl der Rotorwelle überwacht. Ein blockierter Elektromotor wird daran erkannt, dass die Ist-Drehzahl gleich Null und die Soll-Drehzahl ungleich Null ist. Um die Blockierung des Elektromotors aufzuheben, wird erfindungsgemäß bei der Erkennung des blockierten Elektromotors die Soll-Drehrichtung für die vorgegebene Zeitdauer geändert, sodass die Rotorwelle kurzzeitig in die entgegengesetzte Richtung gedreht wird. Nach dieser vorgegebenen Zeitdauer wird der Elektromotor wieder mit der Soll-Drehzahl und der Soll-Drehrichtung angesteuert, sodass die Rotorwelle wieder in die ursprünglich vorgegebene Richtung dreht. Die Änderung der Drehrichtung erfolgt dabei unter der Annahme, dass der Elektromotor bei einer Drehung in die entgegengesetzte Richtung ein geringeres Lastmoment überwinden muss als bei einer Drehung in die ursprünglich vorgegebene Richtung und somit die Anforderung an das Antriebsdrehmoment des Elektromotors sinkt oder zumindest niedriger ist. Diese Annahme beruht auf der eingangs beschriebenen Anordnung des Kolbens an dem Nocken, bei der das Lastmoment innerhalb einer Umdrehung des Nockens einmal maximal ist, wenn die maximale Verlagerung des Kolbens erreicht ist, da hier sowohl die von dem Verlagerungsweg abhängige Federkraft als auch der Druck im Bremskreis maximal sind. Eine Änderung der Drehrichtung führt dazu, dass der Kolben zurück verlagert wird und das Lastmoment und damit die Anforderung an das Antriebsdrehmoment des Elektromotors sinkt. Wenn der Elektromotor nach der vorgegebenen Zeitdauer wieder in Soll-Drehrichtung angesteuert wird, steht zur Überwindung des in Soll-Drehrichtung auftretenden Lastmoments aus der Drehung in Richtung des maximalen Lastmoments eine aus der Beschleunigung resultierende zusätzliche kinetische Energie zur Verfügung, mittels welcher dann das Lastmoment überwindbar ist, ohne dass dafür das Soll-Drehmoment erhöht werden muss. Das erfindungsgemäße Verfahren hat somit den Vorteil, dass ein blockierter Elektromotor erkannt und durch eine geeignete Ansteuerung des Elektromotors die Betätigung des Kolbens wieder ermöglicht wird, indem die Rotorwelle des Elektromotors kurzzeitig in entgegengesetzte Richtung und dann wieder in der Soll-Drehrichtung dreht. Dies wird erreicht, ohne dass das Soll-Drehmoment des Elektromotors erhöht wird. Insbesondere muss kein Elektromotor mit einem höheren maximalen Drehmoment verwendet werden.

Gemäß einer bevorzugten Ausführungsform der Erfindung ist vorgesehen, dass eine Motorwicklung zur Ansteuerung des Elektromotors in Abhängigkeit von einer Winkellage der Rotorwelle bestromt wird, und dass eine Ist-Winkellage der Rotorwelle erfasst und für die vorgegebene Zeitdauer mit einem Offset versehen wird, um daraus die Winkellage zu bestimmen, wobei der Offset derart gewählt wird, dass die Drehrichtung der Rotorwelle geändert wird. Vorzugsweise werden zur Ansteuerung des Elektromotors die Motorwicklungen in Abhängigkeit von der Winkellage der Rotorwelle bestromt, wenn der Elektromotor ein elektrisch kommutierter bzw. bürstenloser Elektromotor ist. Dazu wird zunächst die Ist-Winkellage der Rotorwelle erfasst. Insbesondere ist dazu an der Rotorwelle ein Permanentmagnet angebracht, sodass ein dazu ausgerichteter Sensor, insbesondere ein Hall-Effekt-basierter Sensor, eine Ausrichtung eines Magnetfelds des Permanentmagneten erfasst und daraus die Ist-Winkellage ermittelt wird. Die zur Ansteuerung des Elektromotors verwendete Winkellage wird bestimmt, indem die Ist-Winkellage für die vorgegebene Zeitdauer, nachdem also ein blockierter Elektromotor erkannt wurde, mit einem Offset versehen wird. Die Winkellage entspricht also der Summe aus der Ist-Winkellage und dem Offset. Dieser Offset wird derart gewählt, dass die Drehrichtung der Rotorwelle geändert wird, weil die Motorwicklungen anders bestromt werden, als dies ohne den Offset der Fall wäre. Es werden also durch den Offset die Motorwicklungen derart bestromt, dass dies bei der Ist-Winkellage dazu führt, dass die Rotorwelle kurzzeitig in entgegengesetzter Richtung dreht. So wird die Rotorwelle in eine neue Ist-Winkellage gebracht, aus der heraus der Elektromotor bei erneuter Änderung der Drehrichtung ein geringeres Lastmoment überwinden muss als bei einer Drehung in die ursprünglich vorgegebene Richtung. Nach der vorgegebenen Zeitdauer wird die Winkellage nicht mehr mit dem Offset versehen, sodass die Winkellage der Ist-Winkellage entspricht. Das Versehen der Winkellage mit dem Offset hat also den Vorteil, dass insbesondere einem für die Ansteuerung des Elektromotors ausgebildeten Steuergerät keine Änderung der Soll-Drehrichtung als Parameter übergeben werden muss, stattdessen ergibt sich die Änderung unmittelbar aus der manipulierten Winkellage.

Gemäß einer weiteren bevorzugten Ausführungsform ist vorgesehen, dass die vorgegebene Zeitdauer zwischen 2 und 5 Millisekunden beträgt. Durch eine Festlegung der vorgegebenen Zeitdauer in einem Intervall zwischen 2 und 5 Millisekunden ist vorteilhaft sichergestellt, dass der Elektromotor über eine ausreichend lange Zeitdauer angesteuert wird, sodass eine tatsächliche Drehung der Rotorwelle entgegengesetzt zu der ursprünglichen Soll-Drehrichtung ermöglicht wird. Die Zeitdauer ist in Abhängigkeit von der Drehzahl der Rotorwelle auch vorteilhaft hinreichend kurz, sodass die Rotorwelle insbesondere nur für eine bestimmte Anzahl von Umdrehungen oder einen bestimmten Teil einer Umdrehung in die geänderte Soll-Drehrichtung dreht. Dies ist insbesondere vorteilhaft, wenn das von dem Elektromotor zu überwindende Lastmoment zumindest ein Maximum innerhalb einer Umdrehung der Rotorwelle aufweist, wie es insbesondere bei der Anordnung des Nockens direkt auf der Rotorwelle der Fall ist.

Das erfindungsgemäße Steuergerät für einen Elektromotor zeichnet sich mit den Merkmalen des Anspruchs 4 dadurch aus, dass das Steuergerät speziell dazu hergerichtet ist, das erfindungsgemäße Verfahren durchzuführen. Daraus ergeben sich die bereits genannten Vorteile. Weitere bevorzugte Merkmale und Merkmalskombinationen ergeben sich aus dem zuvor Beschriebenen sowie den Ansprüchen.

Die erfindungsgemäße Kolbenpumpe mit den Merkmalen des Anspruchs 5 weist einen Elektromotor auf, wobei der Elektromotor eine Rotorwelle aufweist, wobei die Rotorwelle einen Nocken oder eine Exzenterscheibe aufweist, wobei ein Kolben der Kolbenpumpe derart an dem Nocken oder der Exzenterscheibe anliegt, dass eine Drehung der Rotorwelle eine Längsverschiebung des Kolbens in axialer Richtung bewirkt. Die Kolbenpumpe zeichnet sich durch das erfindungsgemäße Steuergerät aus. Auch daraus ergeben sich die bereits genannten Vorteile. Weitere bevorzugte Merkmale und Merkmalskombinationen ergeben sich aus dem zuvor Beschriebenen sowie aus den Ansprüchen.

Im Folgenden wird die Erfindung anhand der Zeichnungen näher erläutert. Dazu zeigen:
- Figur 1: einen Elektromotor mit einem Steuergerät und einem Inverter,
- Figur 2: einen Teil einer Kolbenpumpe und
- Figur 3: ein Verfahren zum Betreiben des Elektromotors.

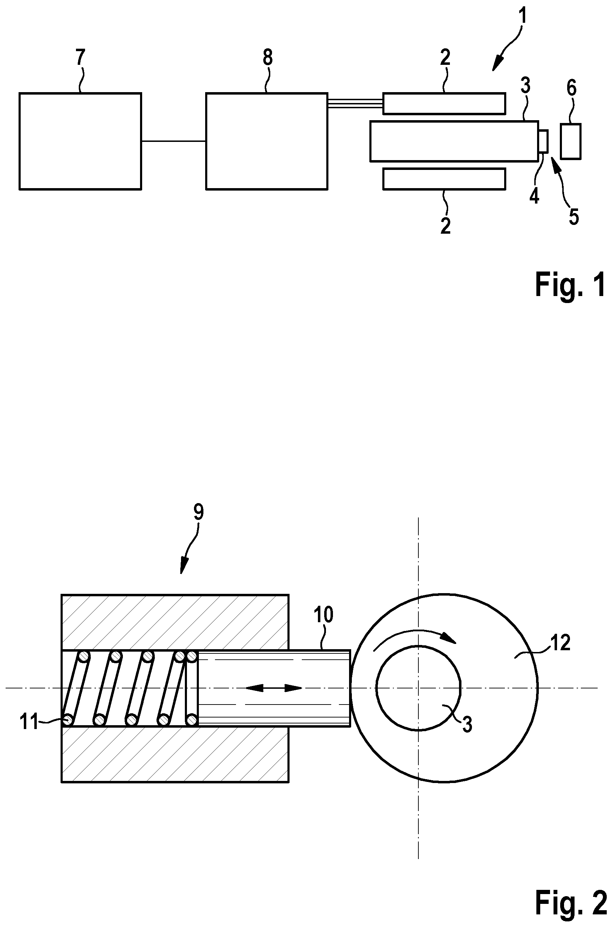

Figur 1 zeigt einen Elektromotor 1, mit einer Motorwicklung 2 und einer Rotorwelle 3, an der stirnseitig ein Permanentmagnet 4 angeordnet ist. Der Elektromotor 1 ist ein elektrisch kommutierter bzw. bürstenloser Elektromotor. Die Ansteuerung des Elektromotors 1 erfolgt üblicherweise in Abhängigkeit von einer Leistungsanforderung mit einer Soll-Drehzahl n_{Soll} und einer Soll-Drehrichtung für die Rotorwelle 3. Zur Ansteuerung des Elektromotors 1 wird im vorliegenden Fall die Ausrichtung eines Magnetfelds 5 des Permanentmagneten 4 von einem dazu ausgerichteten Sensor 6 erfasst und daraus eine Ist-Winkellage φ_{Ist} der Rotorwelle 3 ermittelt. Ein Steuergerät 7 steuert einen Inverter 8 an, der die Motorwicklung 2 in Abhängigkeit von der Leistungsanforderung und einer Winkellage φ bestromt. Im Regelfall entspricht dabei die Winkellage φ der Ist-Winkellage φ_{Ist}.

Figur 2 zeigt einen Teil einer Kolbenpumpe 9 mit einem Kolben 10 und einem Federelement 11. Die Kolbenpumpe 9 ist insbesondere zur Erzeugung eines hydraulischen Drucks in einem Bremskreis einer Bremsanlage betreibbar. Der Kolben 10 der Kolbenpumpe 9 liegt an einem Nocken 12 an. Der Nocken 12 ist mit der Rotorwelle 3 des Elektromotors 1 drehfest verbunden. Im vorliegenden Fall ist der Nocken 12 direkt an der Rotorwelle 3 des Elektromotors 1 angebracht. Der Nocken 12 ist als Exzenterscheibe ausgebildet, d.h., er ist kreisförmig und exzentrisch an der Rotorwelle 3 angebracht. Es ist jedoch ebenso möglich, dass der Nocken12 nicht direkt an der Rotorwelle 3 angebracht, sondern über ein Getriebe mit der Rotorwelle 3 drehfest verbunden wird. Die Rotorwelle 3 dreht sich um eine Drehachse. Durch den Nocken 12 wird die Drehbewegung der Rotorwelle 3 in eine translatorische Bewegung bzw.

Längsbewegung des Kolbens 10 der Kolbenpumpe 9 umgewandelt. Der Nocken 12 liegt an dem Kolben 10 derart an, dass der Kolben 10 durch den Nocken 12 mit einer Druckkraft beaufschlagt wird, durch welche der verschiebbar gelagerte Kolben 10 in Längsrichtung verlagert wird. Diese Verlagerung erfolgt gegen das Federelement 11 und/oder den Druck in dem Bremskreis. Wird die Rotorwelle 3 weitergedreht, nachdem der Kolben 10 maximal verlagert wurde, verlagert sich der Kolben 10 wieder zurück in die ursprüngliche Richtung, da der Kolben 10 aufgrund einer Vorspannung durch das Federelement 11 an den Nocken 12 angedrückt wird.

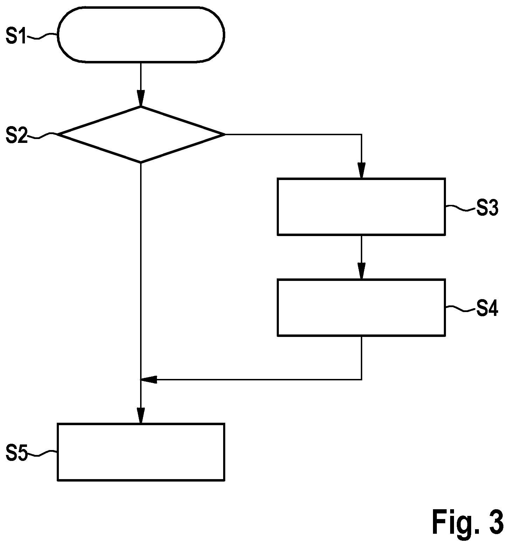

Im Folgenden wird mit Bezug auf Figur 3 ein vorteilhaftes Verfahren zum Betreiben des Elektromotors 1 der Kolbenpumpe 9 beschrieben. Hierzu zeigt Figur 3 das Verfahren anhand eines Flussdiagramms. Insbesondere wird durch das Verfahren gewährleistet, dass ein blockierter Elektromotor 1 erkannt und durch eine geeignete Ansteuerung des Elektromotors 1 die Betätigung des Kolbens 10 wieder ermöglicht wird.

In einem Schritt S1 ermittelt das Steuergerät 7 in Abhängigkeit von einer Leistungsanforderung, insbesondere zum Erreichen eines bestimmten Drucks oder Fördervolumens der Kolbenpumpe 9 in dem Bremskreis, eine Soll-Drehzahl n_{Soll} und eine Soll-Drehrichtung für die Rotorwelle 3. Gleichzeitig ermittelt der Sensor 6 die Ist-Winkellage φ_{Ist} der Rotorwelle 3. In einem Schritt S2 ermittelt das Steuergerät 7 eine Ist-Drehzahl n_{Ist} und vergleicht diese mit der Soll-Drehzahl n_{Soll}. Die Schritte S1 und S2 werden laufend durchgeführt.

Wenn die Ist-Drehzahl n_{Ist} und die Soll-Drehzahl n_{Soll} gleich groß sind, wird das Verfahren mit einem Schritt S5 fortgesetzt. Wenn jedoch die Ist-Drehzahl n_{Ist} gleich Null und die Soll-Drehzahl n_{Soll} ungleich Null ist, ist der Elektromotor 1 blockiert. Dann wird in einem Schritt S3 ein Offset φ_{Offset} ermittelt. Dieser Offset φ_{Offset} wird derart gewählt, dass die Drehrichtung der Rotorwelle 3 geändert wird, weil die Motorwicklung 2 anders bestromt wird, als dies ohne den Offset φ_{Offset} der Fall wäre. Es werden also durch den Offset φ_{Offset} die Motorwicklungen 2 derart bestromt, dass dies bei der Ist-Winkellage φ_{Ist} dazu führt, dass die Rotorwelle 3 in entgegengesetzter Richtung dreht. So werden die Motorwicklungen 2 derart bestromt, dass durch den an der Rotorwelle 3 angebrachten Permanentmagneten 4 ein Drehmoment in der geänderten Drehrichtung entsteht. Bei der Ist-Winkellage φ_{Ist}, die dabei insbesondere aus der Ausrichtung des Magnetfelds 5 ermittelt wird, wird der Offset φ_{Offset} somit derart bestimmt, dass die Winkellage φ als Summe aus Ist-Winkellage φ_{Ist} und Offset φ_{Offset} zu der vorteilhaften Bestromung der Motorwicklungen 2 führt.

In einem Schritt S4 steuert das Steuergerät 7 den Inverter 8 in Abhängigkeit von der Winkellage φ an. Die Winkellage φ entspricht dabei für eine vorgegebene Zeitdauer t der Summe aus der Ist-Winkellage φ_{Ist} und dem Offset φ_{Offset}. Die Motorwicklung 2 wird entsprechend der Leistungsanforderung bestromt, sodass die Rotorwelle 3 des Elektromotors 1 entgegen der Soll-Drehrichtung dreht. Die vorgegebene Zeitdauer t beträgt dabei zwischen 2 und 5 Millisekunden. Durch eine Festlegung der vorgegeben Zeitdauer t in einem Intervall zwischen 2 und 5 Millisekunden wird der Elektromotor 1 über eine ausreichend lange Zeitdauer angesteuert, sodass die Rotorwelle 3 tatsächlich entgegengesetzt zu der ursprünglichen Soll-Drehrichtung dreht. Die vorgegebene Zeitdauer t ist in Abhängigkeit von der Drehzahl der Rotorwelle 3 auch hinreichend kurz, sodass die Rotorwelle 3 insbesondere nur für einen bestimmten Teil einer Umdrehung in die geänderte Soll-Drehrichtung dreht. In dem Schritt S5 steuert das Steuergerät 7 den Inverter 8 in Abhängigkeit von der Winkellage φ an. Die Winkellage φ entspricht dabei der Ist-Winkellage φ_{Ist}. Die Motorwicklung 2 wird entsprechend der Leistungsanforderung bestromt, sodass die Rotorwelle 3 des Elektromotors 1 mit der Soll-Drehzahl n_{Soll} in die Soll-Drehrichtung dreht.

## Patentansprüche

1. Verfahren zum Betreiben eines Elektromotors (1), insbesondere einer Kolbenpumpe (9), wobei der Elektromotor (1) eine Rotorwelle (3) aufweist und in Abhängigkeit von einer Leistungsanforderung mit einer Soll-Drehzahl (n_{Soll}) und einer Soll-Drehrichtung für die Rotorwelle (3) angesteuert wird, wobei eine Ist-Drehzahl (n_{Ist}) der Rotorwelle (3) überwacht wird, **dadurch gekennzeichnet, dass** bei einer Ist-Drehzahl (n_{Ist}) gleich Null und einer Soll-Drehzahl (n_{Soll}) ungleich Null die Soll-Drehrichtung für eine vorgegebene Zeitdauer (t) geändert und anschließend der Elektromotor (1) wieder mit der Soll-Drehzahl (n_{Soll}) und der Soll-Drehrichtung angesteuert wird.

2. Verfahren nach Anspruch 1, **dadurch gekennzeichnet, dass** eine Motorwicklung (2) zur Ansteuerung des Elektromotors (1) in Abhängigkeit von einer Winkellage (φ) der Rotorwelle (3) bestromt wird, und dass eine Ist-Winkellage (φ_{Ist}) der Rotorwelle (3) erfasst und für die vorgegebene Zeitdauer (t) mit einem Offset (φ_{Offset}) versehen wird, um daraus die Winkellage (φ) zu bestimmen, wobei der Offset (φ_{Offset}) derart gewählt wird, dass die Drehrichtung der Rotorwelle (3) geändert wird.

3. Verfahren nach einem der vorhergehenden Ansprüche, **dadurch gekennzeichnet, dass** die vorgegebene Zeitdauer (t) zwischen 2 und 5 Millisekunden beträgt.

4. Steuergerät (7) für einen Elektromotor, **dadurch gekennzeichnet, dass** das Steuergerät (7) speziell dazu hergerichtet ist, das Verfahren gemäß einem der Ansprüche 1 bis 3 durchzuführen.

5. Kolbenpumpe (9) mit einem Elektromotor (1), wobei der Elektromotor (1) eine Rotorwelle (3) aufweist, wobei die Rotorwelle (3) einen Nocken (12) oder eine Exzenterscheibe aufweist, wobei ein Kolben (10) der Kolbenpumpe (9) derart an dem Nocken (12) oder der Exzenterscheibe anliegt, dass eine Drehung der Rotorwelle (3) eine Längsverschiebung des Kolbens (10) in axialer Richtung bewirkt, **gekennzeichnet durch** ein Steuergerät (7) gemäß dem Anspruch 4.

## Claims

1. Method for operating an electric motor (1), in particular a piston pump (9), wherein the electric motor (1) has a rotor shaft (3) and is actuated with a target rotational speed (n_{target}) and a target rotation direction for the rotor shaft (3) depending on a power request, wherein an actual rotational speed (n_{actual}) of the rotor shaft (3) is monitored, **characterized in that** the target rotation direction is changed for a specified time period (t) when an actual rotational speed (n_{actual}) is equal to zero and a target rotational speed (n_{target}) is not equal to zero and then the electric motor (1) is actuated again with the target rotational speed (n_{target}) and the target rotation direction.

2. Method according to Claim 1, **characterized in that** a motor winding (2) for actuating the electric motor (1) is energized depending on an angular position (ϕ) of the rotor shaft (3), and **in that** an actual angular position (ϕ_{actual}) of the rotor shaft (3) is detected and provided with an offset (ϕ_{Offset}) for the specified time period (t) in order to determine the angular position (ϕ) therefrom, wherein the offset (ϕ_{Offset}) is selected in such a way that the rotation direction of the rotor shaft (3) is changed.

3. Method according to either of the preceding claims, **characterized in that** the specified time period (t) is between 2 and 5 milliseconds.

4. Control device (7) for an electric motor, **characterized in that** the control device (7) is specially prepared to carry out the method according to any of Claims 1 to 3.

5. Piston pump (9) comprising an electric motor (1), wherein the electric motor (1) has a rotor shaft (3), wherein the rotor shaft (3) has a cam (12) or an eccentric disc, wherein a piston (10) of the piston pump (9) bears against the cam (12) or the eccentric disc in such way that rotation of the rotor shaft (3) causes a longitudinal displacement of the piston (10) in the axial direction, **characterized by** a control device (7) according to Claim 4.

## Revendications

1. Procédé pour faire fonctionner un moteur électrique (1), en particulier d'une pompe à piston (9), le moteur électrique (1) comprenant un arbre de rotor (3) et étant commandé en fonction d'un besoin en puissance, à une vitesse de rotation de consigne (n_{Soll}) et dans un sens de rotation de consigne pour l'arbre de rotor (3), une vitesse de rotation réelle (n_{Ist}) de l'arbre de rotor (3) étant surveillée, **caractérisé en ce que**, lorsqu'une vitesse de rotation réelle (n_{Ist}) est nulle et une vitesse de rotation de consigne (n_{Soll}) est différente de zéro, le sens de rotation de consigne est modifié pendant une durée prédéfinie (t), puis le moteur électrique (1) est à nouveau commandé à la vitesse de rotation de consigne (n_{Soll}) et dans le sens de rotation de consigne.

2. Procédé selon la revendication 1, **caractérisé en ce qu'**un enroulement moteur (2) est alimenté en courant pour commander le moteur électrique (1) en fonction d'une position angulaire (ϕ) de l'arbre de rotor (3), et **en ce qu'**une position angulaire réelle (φ_{Ist}) de l'arbre rotor (3) est détectée et un décalage (ϕ_{Offset}) est appliqué pendant la durée prédéfinie (t) afin de déterminer à partir de celui-ci la position angulaire (ϕ), le décalage (ϕ_{Offset}) étant choisi de telle sorte que le sens de rotation de l'arbre rotor (3) est modifié.

3. Procédé selon l'une des revendications précédentes, **caractérisé en ce que** la durée prédéfinie (t) est comprise entre 2 et 5 millisecondes.

4. Appareil de commande (7) pour un moteur électrique, **caractérisé en ce que** l'appareil de commande (7) est spécialement conçu pour mettre en œuvre le procédé selon l'une des revendications 1 à 3.

5. Pompe à piston (9) comprenant un moteur électrique (1), le moteur électrique (1) comprenant un arbre de rotor (3), l'arbre de rotor (3) comprenant une came (12) ou un disque excentrique, un piston (10) de la pompe à piston (9) étant en contact avec la came (12) ou le disque excentrique de telle sorte qu'une rotation de l'arbre de rotor (3) provoque un déplacement longitudinal du piston (10) dans la direction axiale, **caractérisée par** un appareil de commande (7) selon la revendication 4.
